(19) Europäisches Patentamt / European Patent Office / Office européen des brevets

(11) **EP 1 538 902 B1**

(12) **FASCICULE DE BREVET EUROPEEN**

(45) Date de publication et mention de la délivrance du brevet:
**29.02.2012 Bulletin 2012/09**

(21) Numéro de dépôt: **03775441.3**

(22) Date de dépôt: **16.09.2003**

(51) Int Cl.:
***A01N 41/12*** *(2006.01)*

(86) Numéro de dépôt international:
**PCT/FR2003/002725**

(87) Numéro de publication internationale:
**WO 2004/026032 (01.04.2004 Gazette 2004/14)**

(54) **TRAITEMENT PESTICIDE DES DENREES STOCKEES, ENCEINTES, STRUCTURES ET OEUVRES D'ART AVEC DES COMPOSES SOUFRES**

PESTIZIDE BEHANDLUNG VON GESPEICHERTEN NAHRUNGSMITTELN, RÄUMEN, STRUKTUREN UND KUNSTWERKEN MITTELS SCHWEFELVERBINDUNGEN

PESTICIDAL TREATMENT OF STORED GOODS, ENCLOSURES, STRUCTURES AND WORKS OF ART, WITH SULPHUR COMPOUNDS

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **19.09.2002 FR 0211605**

(43) Date de publication de la demande:
**15.06.2005 Bulletin 2005/24**

(60) Demande divisionnaire:
**08167229.7 / 2 030 506**

(73) Titulaire: **ARKEMA FRANCE**
**92700 Colombes (FR)**

(72) Inventeurs:
• **AUBERT, Thierry**
**F-64000 Pau (FR)**

• **AUGER, Jacques**
**F-37250 Veigne (FR)**

(74) Mandataire: **Lhoste, Catherine et al**
**ARKEMA FRANCE**
**Département Propriété Industrielle**
**420 Rue d'Estienne d'Orves**
**92705 Colombes Cedex (FR)**

(56) Documents cités:
**FR-A- 2 779 615     US-A- 2 917 429**

Remarques:
Le dossier contient des informations techniques présentées postérieurement au dépôt de la demande et ne figurant pas dans le présent fascicule.

## Description

La présente invention concerne le domaine du traitement pesticide des denrées stockées, des enceintes, et structures, et des oeuvres d'art et a plus particulièrement pour objet un traitement pesticide par nébulisation à l'aide de composés soufrés. Actuellement, le traitement pesticide des denrées stockées, enceintes, structures et oeuvres d'art, est effectué essentiellement selon deux techniques :

- La fumigation, utilisant en particulier le bromure de méthyle (BM) et la phosphine ($PH_3$) qui agissent à l'état gazeux sur la chaîne respiratoire des organismes visés,
- Les traitements dits « de contact », utilisant par exemple des insecticides organophosphorés, en particulier le dichlorvos, qui agissent à l'état condensé directement sur les organismes visés.

Le bromure de méthyle (BM) présente à l'état gazeux d'excellentes propriétés nématicide, fongicide, insecticide et bactéricide. Malheureusement, ce composé contribue à l'appauvrissement de la couche d'ozone et, conformément à l'accord de Montréal (1992), il ne devra plus être utilisé en 2005 dans les pays industrialisés. La phosphine ($PH_3$) présente des inconvénients majeurs comme sa toxicité, la durée des traitements et la corrosion des équipements dans lesquels ce composé est mis en oeuvre (Pest Control (1999) Vol. 67 (1) p. 46).

Par ailleurs, les composés organophosphorés ont un spectre d'activité réduit à leur action insecticide et sont générateurs de résidus toxiques. En outre, comme ils n'agissent que par contact directement avec les organismes visés, ils ne peuvent atteindre les formes dites cachées de ces organismes ; aussi, les oeufs et les larves des insectes situés à l'intérieur des grains de blé ou de maïs ne sont pas tués par l'insecticide. Ce type de traitement est nettement moins efficace.

Il apparaît donc un besoin urgent de proposer aux utilisateurs des solutions alternatives efficaces et les plus respectueuses possibles de l'environnement. Des exemples de produits fumigants en développement pour ces applications sont connus et sont décrits dans différents articles, notamment dans World Grain, Feb. 2001 p. 28-30 et Crop Prot (2000) 19 (8-10) p. 577-582 ; mais les solutions envisagées présentent également des inconvénients majeurs comme leur coût élevé (iodure de méthyle), leur faible disponibilité (oxysulfure de carbone) ou leur toxicité (fluorure de sulfuryle).

Une autre famille de composés, les produits soufrés issus des effluves de certains végétaux, par exemple les Allium, est également connue pour son activité pesticide et répulsive et a déjà fait l'objet de nombreuses publications (Ecologie (1994) 25(2), p93-101, Ed. Tec. et Doc., Biopesticides d'origine végétale (2002) p77-95, Insect Sci. Applic. (1989)10(1), p49-54, Pestic. Sci. (1999), Vol 55, p197-218). L'utilisation de ces composés soufrés comme fumigants dans l'application principale envisagée, le traitement des denrées stockées, n'a pu être réalisée qu'avec une technique bien particulière qui est décrite dans la demande de brevet FR-A-2 779 615 déposée en 1997 : la circulation de gaz en boucle dans un silo étanche au moyen d'une pompe. En effet, il est essentiel qu'un fumigant pour le traitement des denrées stockées diffuse rapidement sous la forme gaz dans la masse à traiter. Or, il a été démontré par la demanderesse que ces produits soufrés diffusent trop lentement de manière spontanée dans une masse de grains, entraînant des différences importantes de concentration en gaz à l'intérieur de cette masse et donc une inefficacité du traitement. La solution proposée dans la demande de brevet précédemment citée, consistant à entraîner le gaz actif dans un flux d'air ou d'air enrichi en $CO_2$ est une technique coûteuse, non disponible sur la plupart des installations existantes et difficilement applicable en raison du manque d'étanchéité de la majorité des installations de stockage de denrées.

Il a maintenant été trouvé que le diméthyl disulfure (DMDS) est un fumigant particulièrement intéressant pour le traitement des denrées stockées lorsqu'il est appliqué par nébulisation comme les insecticides de contact. La présente invention a donc pour objet une méthode de traitement pesticide des denrées stockées, caractérisé en ce que l'on applique par nébulisation du DMDS dissous dans un solvant biodégradable. Le DMDS est suffisamment volatil pour passer rapidement dans les conditions habituelles de température et de pression, de l'état liquide à l'état gazeux dans lequel il est actif. La technique de nébulisation présente l'avantage d'appliquer le DMDS directement à l'endroit où il doit agir, ce qui résout le problème de sa diffusion spontanée trop lente dans la masse à traiter. De plus, elle peut être utilisée dans des installations d'étanchéité imparfaite et dans les équipements existants destinés à l'application des insecticides de contact.

Le DMDS présente non seulement des propriétés pesticides vis à vis des insectes, champignons, bactéries, virus, nématodes, arachnides et rongeurs mais aussi des propriétés répulsives vis à vis des insectes, arachnides et rongeurs.

Il convient donc parfaitement bien pour le traitement pesticide et/ou répulsif des denrées stockées sèches ou humides, telles que le blé, le maïs, le riz, les pommes, les fruits secs et les produits transformés secs comme par exemple les aliments pour animaux, des enceintes et structures, telles que les silos, le bois d'oeuvre, les structures en bois dont celles utilisées pour la culture des champignons, y compris les traitements de quarantaine.

Comme substitut au bromure de méthyle, le DMDS est d'autant plus intéressant qu'il est déjà présent dans la nature en provenance de la dégradation naturelle des crucifères et des alliums. D'autre part, ne contenant pas d'atomes d'halogène générateurs de radicaux halogénés responsables de la destruction catalytique de l'ozone stratosphérique, le DMDS est sans danger pour la couche d'ozone.

Les solvants organiques utilisables pour dissoudre le DMDS sont les hydrocarbures, les alcools, les éthers, les cétones, les esters, les solvants halogénés, les huiles minérales, les huiles naturelles et leurs dérivés ainsi que les solvants polaires aprotiques tels que le diméthylformamide, le diméthylsulfoxide ou la N-méthylpyrrolidone. Conviennent particulièrement bien les solvants biodégradables plus particulièrement les esters méthyliques des huiles de colza et de soja.

LeDMDS est appliqué selon la méthode connue par l'homme de l'art pour les insecticides de contact, par nébulisation du produit dissous directement sur le matériel à traiter, dans une atmosphère d'air pur ou d'air enrichi en $CO_2$.

Les doses de DMDS à utiliser pour obtenir l'effet désiré doivent atteindre un objectif en terme de CT, c'est-à-dire du produit de la concentration C en matière active dans l'air et du temps T pendant lequel on laisse le produit agir. Le produit CT indique la dose cumulée de composé actif à laquelle sont soumis les organismes pathogènes pendant le traitement. L'objectif est d'atteindre une valeur de produit CT, dite CT létal, correspondant à la destruction totale des organismes visés. Pour un traitement optimal, la valeur du produit CT létal doit être atteinte le plus rapidement possible et de façon la plus homogène possible dans la masse ou sur le matériau à traiter; ceci est obtenu grâce la méthode d'application par nébulisation du composé.

Les CT létaux se situent généralement entre 20 et 200 ghm$^{-3}$ et dépendent de la nature du composé (I), du niveau d'infestation, de la nature de l'organisme visé, du type de matériel à traiter, de la ventilation des enceintes.

Une fois l'effet létal obtenu, le produit (I) est éliminé par ventilation et ne génère donc aucun résidu sur le matériel à traiter.

### Example 1 (comparatif)

Dans cet exemple, on utilise comme composé de formule (I) le diméthyldisulfure (DMDS) et on étudie sa diffusion spontanée dans un silo de grains de blé.

Matériel et méthode :

Température : 20 °C
Dimension du silo :

- hauteur totale : 80 cm
- diamètre : 46 cm
- volume total : 1301
- taux de remplissage : 80 % soit 79 kg de blé
- hauteur de grains : 72 cm

On dépose le DMDS pur à une concentration de 30gm$^{-3}$ à la surface des grains à l'aide d'une seringue.
On mesure ensuite par chromatographie en phase gazeuse en fonction du temps (en heures) les concentrations en DMDS sous la forme gazeuse à la surface du silo de grains de blé où est introduit le DMDS (point A : 0 cm), ainsi qu'à 36 cm en-dessous du niveau des grains dans le silo (point B : - 36 cm) et à l'extrémité inférieure du silo (point C : - 72 cm).
On détermine les produits CT des concentrations C de DMDS par les temps de mesure T aux différents points de mesure sur une durée de 3 jours. On trouve ainsi les valeurs de CT en ghm$^{-3}$ indiquées dans le tableau 1.

**Tableau 1**

| Temps (jours) | CT | | |
|:---:|:---:|:---:|:---:|
| | A | B | C |
| **1** | 542 | 46 | 4 |
| **2** | 630 | 80 | 14 |
| **3** | 821 | 180 | 62 |

Les produits CT du DMDS ne sont pas homogènes dans toute l'épaisseur du silo, même après un long temps de séjour. Les conditions d'application du DMDS dans cet exemple ne permettent pas d'obtenir une diffusion spontanée suffisamment rapide du fumigant.

**Exemple 2** (comparatif)

Cet exemple qui n'utilise pas l'application par nébulisation, permet d'obtenir un gradient de concentration sur la hauteur de l'enceinte et de déterminer ainsi les valeurs de produit CT létal dans un silo de grains de blé infestés des deux organismes pathogènes habituellement reconnus comme ravageurs principaux des denrées stockées. Ces deux organismes sont Sitophilus granarius et Sitophilus orizae.

Matériel et méthode

Température : 20 °C
Dimension du silo :

- hauteur totale : 40 cm
- volume total : 3,3 1
- taux de remplissage : 75 % soit une hauteur de grains d'environ 33 cm

On dépose 99 mg de DMDS pur à la surface des grains à l'aide d'une seringue.
Les échantillons prélevés sont constitués de ballots de 50 g de blé contenant tous les stades de développement des organismes pathogènes. A l'issue du dégazage par aération du silo aux temps T, les ballots de blé sont tamisés et les adultes sont comptabilisés juste après le tamisage (J+0) et après 14 jours (J+14). Le blé renfermant les autres stades de développement est ensuite observé durant 5 semaines.
On détermine les produits CT des concentrations C de DMDS par les temps de mesure
T et l'on suit en fonction de ces produits CT l'efficacité du traitement vis à vis des 2 organismes pathogènes étudiés pour tous les stades de développement. Les résultats sont exprimés :

- en pourcentage de mortalité des adultes aux temps (J+0) et (J+14).
- en pourcentage de réduction d'émergence nette (% REN) par rapport à un lot témoin non traité pour les différents stades de développement de ces organismes (c'est à dire oeufs et $2^{ème}$ génération, oeufs et larves I° stade, larves 1° et II° stades, larves II° et III° stades, larves III° et IV° stades, larves

IV° stade et nymphes), qui correspond à la formule suivante :

$$\% \text{ REN} = (\text{Nombre d'insectes émergés vivants du lot témoin - Nombre d'insectes émergés vivants du lot traité}) / (\text{Nombre d'insectes émergés vivants du lot témoin}).$$

**A - Cas de Sitophilus granarius**

Les résultats sont rassemblés dans le tableau 2.

**Tableau 2**

| CT | % mortalité des adultes | | % REN pour les différents stades du lot traité au DMDS | | | | | | Total | |
|---|---|---|---|---|---|---|---|---|---|---|
| | J+0 | J+14 | Oeufs et 2° génération | Oeufs et Larves I° stade | Larves I° et II° stade | Larves II° et III° stade | Larves III° et IV° stade | Larves IV° stade et Nymphe | Nbre d'insectes émergés | % RF |
| 5.8 | 0 | 8 | 13 | 41 | 20 | 13 | 3 | 21 | 202 | 25 |
| 6.1 | 3 | 9 | 33 | 5 | 80 | 16 | 19 | 54 | 208 | 23 |
| 15.0 | 64 | 93 | 25 | 54 | 88 | 71 | 26 | 75 | 126 | 54 |
| 26.9 | 92 | 92 | 20 | 79 | 88 | 94 | 65 | 92 | 75 | 72 |

(suite)

| | % mortalité des adultes | | % REN pour les différents stades du lot traité au DMDS | | | | | | Total | |
| --- | --- | --- | --- | --- | --- | --- | --- | --- | --- | --- |
| CT | J+0 | J+14 | Oeufs et 2° génération | Oeufs et Larves I° stade | Larves I° et II° stade | Larves II° et III° stade | Larves III° et IV° stade | Larves IV°stade et Nymphe | Nbre d' insectes émergés | % RF |
| 50.5 | 100 | 100 | 93 | 100 | 100 | 100 | 97 | 100 | 4 | 99 |
| 88.4 | 100 | 100 | 95 | 100 | 100 | 100 | 100 | 100 | 2 | 99 |
| 160.4 | 100 | 100 | 100 | 100 | 100 | 100 | 100 | 100 | 0 | 100 |
| | | | Nombre d'insectes émergés vivants du lot témoin non traité | | | | | | | |
| | | | 40 | 120 | 25 | 31 | 31 | 24 | 271 | |

Le tableau 2 montre qu'un produit CT de 160 gh.m$^{-3}$ aboutit à une mortalité de 100 % pour tous les stades de développement de Sitophilus granarius et que, dès les valeurs de CT supérieures à 50 gh.m$^{-3}$, on obtient 100 % de mortalité pour la majorité des stades. L'efficacité pesticide du DMDS vis à vis de l'organisme pathogène Sitophilus granarius est évaluée en terme de produit CT à environ 100 ghm$^{-3}$ (CT utile).

**B - Cas de Sitophilus orizae**

Dans les mêmes conditions d'essais, cette fois sur les organismes de type Sitophilus orizae, on obtient des résultats similaires. L'efficacité pesticide du DMDS vis à vis de l'organisme pathogène Sitophilus orizae est évaluée en terme de produit CT à environ 100 ghm$^{-3}$ (CT utile).

**Exemple 3**

Dans cet exemple, on utilise du DMDS formulé en solution à 30% dans un ester méthylique d'huile de colza (Radia ®7961 fourni par la société OLEON). Son efficacité est étudiée dans un silo de grains de blé en suivant son adsorption sur les grains en fonction du temps après son application par nébulisation.

Matériel et méthode

Température : 20°C
Enceinte :

- volume total : 31
- hauteur totale : 28 cm
- remplissage de 1 kg de grains de blé, soit une hauteur de 15 cm

On introduit 90 mg de DMDS pur en solution dans 210 mg de Radia®7961 par 2 pulvérisations successives au moyen d'un nébulisateur. L'enceinte est immédiatement agitée mécaniquement de manière à homogénéiser rapidement la concentration en gaz dans la masse traitée.

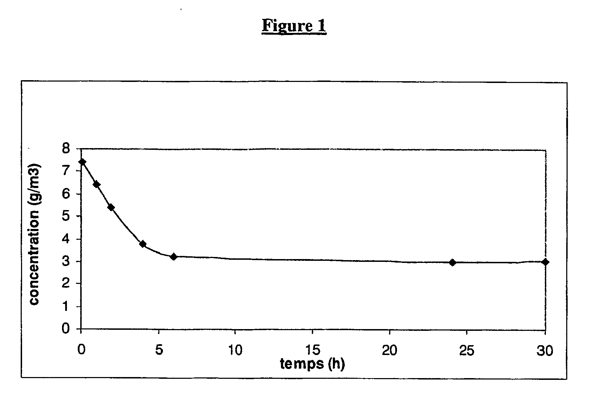

Les concentrations en DMDS dans l'atmosphère de l'enceinte sont suivies pendant 5 jours par analyse SPME-CG-SM , La figure 1 illustre la concentration de DMDS dans l'atmosphère de l'enceinte en fonction du temps pendant les 30 premières heures. On observe que la concentration en DMDS dans l'atmosphère de l'enceinte diminue régulièrement au cours des 5 premières heures pour atteindre la valeur de 3gm$^{-3}$ qui reste constante ensuite durant les 5 jours. Le produit CT utile de 100 ghm$^{-3}$ correspondant à une efficacité optimale du DMDS, est atteint après 30 heures de traitement dans les conditions d'application de l'invention.

**Revendications**

1. Utilisation de DMDS dissous dans un solvant organique biodégradable pour le traitement pesticide des denrées stockées et des silos, par nébulisation.

**2.** Utilisation selon la revendication 1, dans laquelle ledit solvant est choisi parmi les esters méthyliques des huiles de colza et de soja.

**3.** Utilisation selon l'une quelconque des revendications 1 ou 2, **caractérisée en ce que** le produit CT de la concentration en DMDS appliqué et du temps pendant lequel on laisse agir le DMDS, pour obtenir une destruction totale des organismes visés, est compris entre 20 et 200 ghm$^{-3}$.

**Claims**

**1.** Use of DMDS dissolved in a biodegradable organic solvent for the pesticidal treatment of stored produce and silos by nebulization.

**2.** Use according to Claim 1, in which said solvent is chosen from methyl esters of rapeseed oil and of soya oil.

**3.** Use according to either one of Claims 1 and 2, **characterized in that** the product CT of the concentration of DMDS applied and of the time for which the DMDS is allowed to act, in order to obtain complete destruction of the targeted organisms, is between 20 and 200 ghm$^{-3}$.

**Patentansprüche**

**1.** Verwendung von in einem biologisch abbaubaren organischen Lösungsmittel gelösten DMDS für die pestizide Behandlung von lagernden Erntegütern und von Silos durch Vernebeln.

**2.** Verwendung nach Anspruch 1, wobei das Lösungsmittel aus der Reihe Rapsöl- und Sojaölmethylester stammt.

**3.** Verwendung nach einem der Ansprüche 1 oder 2, **dadurch gekennzeichnet, dass** das Produkt CT aus der angewandten DMDS-Konzentration und der DMDS-Einwirkzeit für eine vollständige Abtötung der Zielorganismen zwischen 20 und 200 ghm$^{-3}$ liegt.

**Figure 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2779615 A

**Littérature non-brevet citée dans la description**

- *Pest Control,* 1999, vol. 67 (1), 46
- *World Grain,* Février 2001, 28-30
- *Crop Prot,* 2000, vol. 19 (8-10), 577-582
- *Ecologie,* 1994, vol. 25 (2), 93-101
- *Ed. Tec. et Doc., Biopesticides d'origine végétale,* 2002, 77-95
- *Insect Sci. Applic.,* 1989, vol. 10 (1), 49-54
- *Pestic. Sci.,* 1999, vol. 55, 197-218